(19) Europäisches Patentamt

European Patent Office

Office européen des brevets

(11) **EP 3 451 672 A1**

(12) **EUROPEAN PATENT APPLICATION**

(43) Date of publication:
06.03.2019 Bulletin 2019/10

(51) Int Cl.:
*H04N 21/234* (2011.01)    *H04N 21/2343* (2011.01)
*H04N 21/2662* (2011.01)

(21) Application number: **17382585.2**

(22) Date of filing: **29.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• **CASAL MARTIN, Juan**
  **28034 Madrid (ES)**
• **RUANO PUENTE, Jorge**
  **28003 Madrid (ES)**
• **NORTES NOLASCO, Alberto**
  **28222 Madrid (ES)**

(74) Representative: **Herrero & Asociados, S.L. Cedaceros, 1 28014 Madrid (ES)**

(54) **METHOD AND DEVICE FOR VIDEO CONTENT ENCODING OPTIMISATION IN ADAPTIVE STREAMING SYSTEMS**

(57) A method and a video encoder receiving of a video content (1) portions encoded to an initial fixed bitrate/resolution and to be streamed to a client device, via adaptive streaming, comprising obtaining optimisation resolutions for the client device, based on the initial configuration and a reference resolution associated with the client device type, and a range of transmission bitrates based on the initial configuration and network bandwidth. Combinations of bitrate/resolution at every bitrate of the range are obtained for each of the optimisation resolutions. The received video content (1) is demultiplexed (2), decoded (3) and, for every optimization resolution, scaled by the previously defined reference resolution (4) and compared with its downscaling to the fixed resolution. The quality for each combination of bitrate/resolution, including the fixed resolution and reference resolution, is measured (9) after upscaling (8) the video to the reference resolution. Each video content portion is encoded to an optimized configuration of bitrate/resolution based on the measured quality.

FIG. 2

EP 3 451 672 A1

**Description**

**BACKGROUND OF THE INVENTION**

**Technical field**

The present invention relates to the encoding and delivery of multimedia contents (e.g., text, audio, video, software, etc., and any combination of them) which use an adaptive streaming format in communications networks. More particularly, the present invention relates to the optimization of bitrate and quality of Adaptive Bitrate Streaming (ABR) videos in adaptive streaming systems.

**Description of related art**

Nowadays, most of the traffic of Internet networks is video. The abundance of Internet Video constitutes a challenge for network design, especially in the case of Mobile Networks, because the bandwidth requirements associated with video services are much higher than for other services like voice and messaging.
In most of the cases, video delivery over Internet is done using Adaptive streaming protocols, like HLS (HTTP Live Streaming), SmoothStreaming or MPEG-DASH (Dynamic Adaptive Streaming over HTTP). Adaptive video streaming is a hybrid of progressive download and streaming, using the existing HTTP (HyperText Transfer Protocol) protocol.
Adaptive streaming video content is composed of different video streams (or layers). The configuration of these Adaptive Streaming Layers is done using a fixed combination of bitrate and resolution, creating a quality ladder of video streams. An example is shown in Table 1:

Table 1

| Video Layer | Resolution | Bitrate |
| --- | --- | --- |
| Layer1 | 426x240 | 500 Kbps |
| Layer2 | 640x360 | 800 Kbps |
| Layer3 | 854x480 | 1500 Kbps |
| Layer4 | 1280x720 | 3000 Kbps |
| Layer5 | 1920x1080 | 6000 Kbps |

These video streams are partitioned in video segments, so that every segment in a layer contain the same media information with different video quality, as the same segment in other layer, in a way that the video player can switch from one layer to another at segment boundaries, dynamically adapting the quality to network bandwidth.
Since an Adaptive Streaming Layer is encoded at a fixed resolution-bitrate configuration, the final video is delivered by:

　　a) using a higher bitrate than required for achieve a target quality, or/and
　　b) presenting a lower quality that the one that can be achieved with the target bitrate.

There is a need of providing content based optimization models for each of the videos to be optimized which allow a balance of bitrate and resolution in video encoding for adaptive streaming video content.

**SUMMARY**

In light of the present need for providing a content based model to optimize bitrate and quality of ABR video, the present invention provides a technique to balance these optimizations based on quality-bitrate characterization of the content, and expands the optimization model to create multidevice video services. The proposed technique, here called Conditional encoding, has been created to optimize adaptive video streaming layers (ABR content) provided to a client device by dynamically modifying the resolution and bitrate of ABR video representations, based on a given "reference resolution".
Conditional encoding optimizes video encoding for HTTP Adaptive Streaming profiles, considering a "Reference Resolution", which is defined as the resolution that best represents the family/type of devices (e.g., smartphone, tablet, computer screen, tv digital set, etc.) which the content is created for. This Reference Resolution is used to measure and compare video quality between the different ABR video layers of a service, when watched in the family of video clients characterized by the Reference Resolution. Not only the video encoding degradation, but also the spatial degradation due to the resolution of each ABR video layer can be measured by using the Reference Resolution. For example if the video is targeted for mobile market, it is expected that maximum resolution can be 1280x720 (this is independent of the device resolution, the concept is that, because of the screen size, higher resolutions are not appreciated by the viewer). According to that input value, instead of creating video profiles with fixed bitrate and resolution, each portion of the video is encoded with enhanced quality and/or reduced bitrate to the optimum combination of bitrate/resolution that provides at least the same quality than the fixed bitrate configuration.

This optimum combination is achieved by using quality-bitrate graphs for each resolution. Following scenarios are possible:

> a. Bitrate decreased keeping quality fixed.
> b. Quality increased keeping bitrate fixed.
> c. Both bitrate decreased and quality increased

Further, in case of multiple devices having multiple resolutions, the quality/bitrate optimization is also increased by using a bigger number of resolutions for characterization than the number of video layers. More particularly, in case of having a wide range of device families, each family is assigned to a Reference resolution. ABR layers for each device family are characterized at its Reference Resolution and then created using an optimal bitrate/resolution value for that device family. At the end, a set of optimized video layers is created for each device family.

To achieve this target, Conditional encoding is functionally thought as an "intelligent" layer built on top of the video encoders used for ABR video creation, dynamically modifying the video configuration (bitrate and resolution) to optimize their quality and/or bitrate. Conditional Encoding is based on a two-step process: Analysis and Video Encoding based on the optimized configuration. The analysis proposed by conditional encoding is based on empirical bitrate-quality characterization of the content to be optimized. The optimization of the bitrate-resolution parameters is done in a segment/sequence basis, based on the previous analysis done, and is mathematically specified, and so, it can be reproduced by implementing the described process. Based on this optimization, Conditional Encoding defines how to optimize a multidevice ABR video service by characterizing video representations for different types of client devices. Thus, the whole process performs the following steps:

- Defining a reference resolution, each reference resolution is defined in association with a different type of client device.
- Characterizing the video content for multiple resolutions that are less than or equal to the respective reference resolutions for multiple devices.
- Based on the reference resolution of the client device (type), encoding each portion of the video such the combination of bitrate and resolution is optimal instead of fixed and the quality is same or better.

Conditional Encoding is agnostic to the video codec (H264, H265, VP8, VP9, VC1, ...) and the video quality metric (PSNR, MSE, MSAD, SSIM, MSU,...) used for video content characterization.

The video content characterization is represented as a bitrate vs quality graph, in which an Area of Optimization (or Opportunity Area) can be defined as the area in a bitrate-quality graph where the video can be improved either in quality, bitrate or both, compared to a previous encoded configuration (any of the layers of the layer configuration to be optimized). All the resolutions that crosses the Opportunity Area are suitable to be used to optimize the resolution-bitrate configuration. The present invention describes an optimization model based in costs that formalizes the decision of balancing bitrate and quality optimization inside the Opportunity Area. This model can be applied to multidevice video services, by creating ranges of the original layers of the video content based on the Reference Resolution of the different devices. Conditional Encoding also defines the use of a higher number of resolutions than the ones of the original layer configuration, in order to achieve a higher optimization.

Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

According to an aspect of the invention, a method of video content encoding optimisation in adaptive streaming systems, wherein video content portions are received from a video content encoded to an initial configuration of fixed bitrate/resolution combination, the fixed combination of bitrate and resolution being defined by an adaptive streaming layer provided by the client device to which the content is intended. The method comprising:

- obtaining a plurality of optimisation resolutions for the client device based on a reference resolution, the reference resolution being associated with the type of client device, and the fixed combination of bitrate and resolution;

- obtaining a range of transmission bitrates based on the network bandwidth and the fixed combination of bitrate and resolution;
- obtaining for each of the optimisation resolutions, a plurality of combinations of bitrate and resolution at every bitrate of the range of transmission bitrates;
- calculating a quality value associated with each combination of bitrate and resolution obtained at the previous step and an initial quality value associated with the fixed combination of bitrate and resolution;
- encoding each video content portion to a selected combination of bitrate and resolution, the combination of bitrate and resolution used for encoding being selected based on the calculated quality values and initial quality value.

According to another aspect of the invention a video encoder device is provided, comprising processing means configured for implementing the method of optimizing video encoding in adaptive streaming described before.

Another aspect of the invention relates to a computer program product comprising computer-executable instructions for performing any of the steps of the method previously disclosed, when the program is run on a computer and a digital data storage medium is also provided encoding a machine-executable program of instructions to perform any of the steps of the method previously disclosed.

These and other aspects of the invention will be apparent from and elucidated with reference to the embodiments described hereinafter.

Conditional Encoding is a completely different analysis-optimization process from the ones in the state of the art. The presented embodiments potentially have the following advantages when compared with the prior art:

- The present invention improves the user experience on video quality while reducing the bit rate of adaptive video streaming to video devices.
- The present invention uses (Conditional) encoding to create the bitrate-quality model based on characterizing different resolutions as well as to limit the resolution set available for optimization for a given device.
- The present invention performs a video analysis consisting in a bitrate-quality characterization process. Conditional encoding specifies an explicit process to analyze video quality at different resolutions for a specific Reference Resolution, and an explicit model to optimize video quality based on that analysis. Conditional Encoding creates a specific optimization model for each of the videos to be optimized using bitrate-quality characterization for the different resolutions available for optimization, the specific optimization model being characterized for targeting a specific Reference Resolution of the video device.

## BRIEF DESCRIPTION OF THE DRAWINGS

Some embodiments of the method, system and device in accordance with embodiments of the present invention are now described, by way of example only, and with reference to the accompanying drawings, in which:

Figure 1 shows a graph of video quality versus bitrate for different resolutions of the adaptive streaming layers available for Conditional Encoding optimization, measuring quality at a Reference Resolution.

Figure 2 shows a flow diagram of the Conditional Encoding process based on bitrate and quality parameters.

Figure 3 shows a flow diagram of a specific example for video device characterization based on bitrate and quality parameters.

Figure 4 shows a graph of optimal encodings of a video content portion for different reference resolutions.

Figure 5 shows three possible optimization scenarios for encoding a video content portion previously encoded to a fixed bitrate.

Figure 6 shows an Opportunity Area for a particular encoding in the graph of

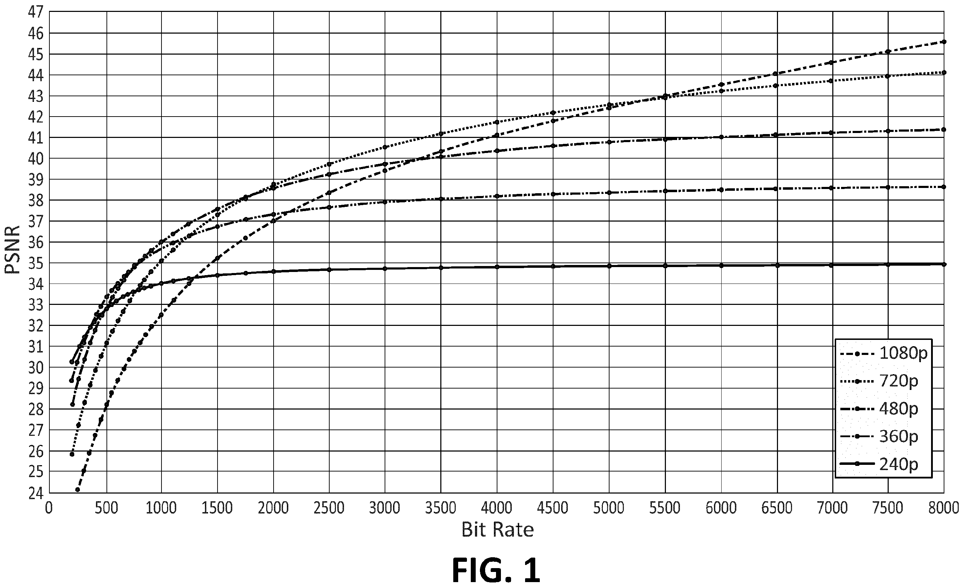

Figure 1, according to a preferred embodiment of the invention.

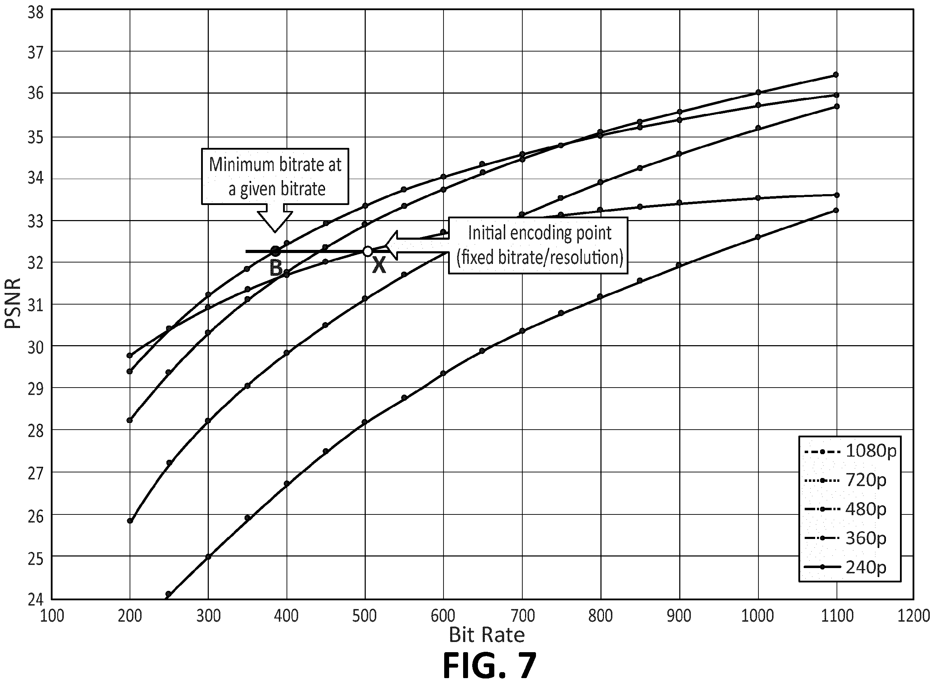

Figure 7 shows the best optimization in terms of bitrate in the graph of Figure 1, according to a possible embodiment of the invention.

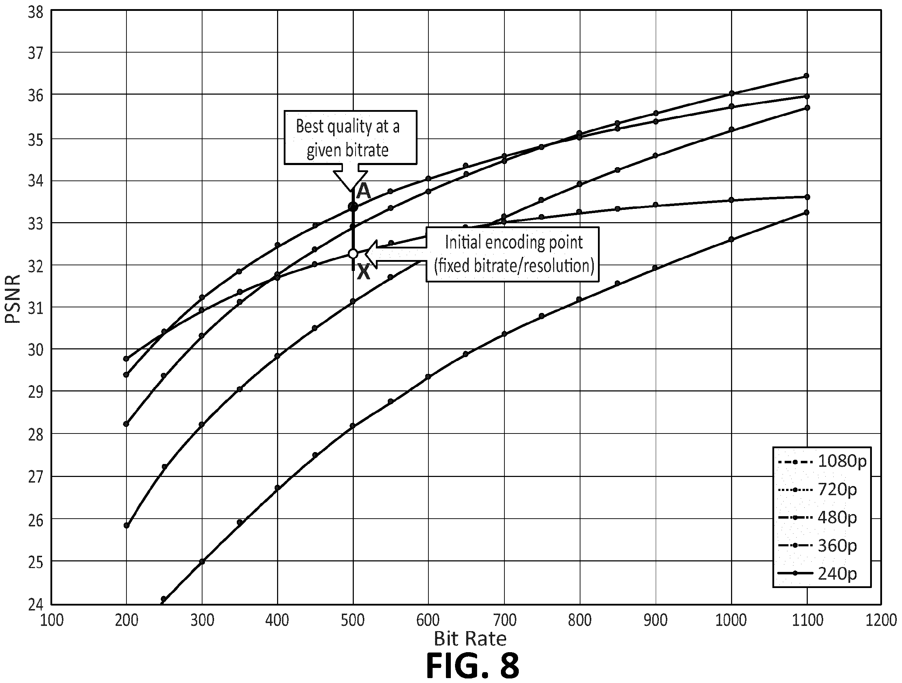

Figure 8 shows the best optimization in terms of quality in the graph of Figure 1, according to another possible embodiment of the invention.

Throughout the figures like reference numerals refer to like elements.

## DESCRIPTION OF EMBODIMENTS

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The present invention presents a complete process, here called Conditional Encoding, to optimize an existing ABR service. Conditional Encoding aims at optimizing ABR video content, maintaining or increasing the user experience while reducing the bit rate. This is achieved by modifying the video resolution and bitrate configuration of the video. Thus, the bitrate of the optimized video layers may vary over time limited by the original configuration of the ABR video service being optimized. Therefore, Conditional Encoding creates a model to optimize a currently existing video service by applying a dynamic resolution/dynamic bitrate model to Adaptive Streaming Layers configurations as depicted in the aforementioned Table 1.

The optimization model created by Conditional Encoding is based on Content, Device and Network characterization, as follows:

i) Device is characterized by a Reference Resolution associated with the type of device and, taking into account the Reference Resolution and fixed configuration of the service to be optimized, a number of optimization resolutions is defined for content characterization. These optimization resolutions are defined so that:

- Number of optimization resolutions $\geq$ Number of resolutions of fixed configurations.
- Value of optimization resolution $\leq$ Value of Reference Resolution

ii) Network is characterized by imposing an upper limit in the transmission bandwidth and, taking into account the Network bandwidth and fixed configuration of the service to be optimized, a range of transmission bitrates is defined for content characterization.

iii) Content is characterized by creating for each of the resolutions defined in point i), a great number of video encodings at different bitrates covering the full range of transmission bitrates defined in point ii), and calculating the quality of each of the video encodings in Reference Resolution.

The result of this video content characterization can be represented as a bitrate vs quality graph, as shown in Figure 1, where each line represents the evolution of video quality, measured as Peak Signal-to-Noise Ratio or PSNR, but can be any other quality metric, of multiple encodings of the video content at different bitrates for a particular resolution, measured in pixels. Each point in a line represents a video encoding at a resolution-bitrate pair and its quality measured after decoding and upscaling the encoded video to the Reference Resolution; in the example illustrated by Figure 1, Reference Resolution = 1080x1960 pixels. It is important to note that this characterization is deterministic for the characterized content, and it does not necessary characterize other contents. It is also important to note that the graph shown in Figure 1 is composed of real quality metrics that have been empirically measured and are not estimations. This graph gives the information about optimal resolution-bitrate configurations for the different bitrates. As an example, for 500kbps bitrate, 360p resolution gives better quality than 240p, being 240p the resolution configured in the initial layer configuration. So, by encoding the Layer1 of this content at a resolution of 360p a better quality will be achieved at 500Kbps, or a similar quality at a slightly lower bitrate than 500kbps.

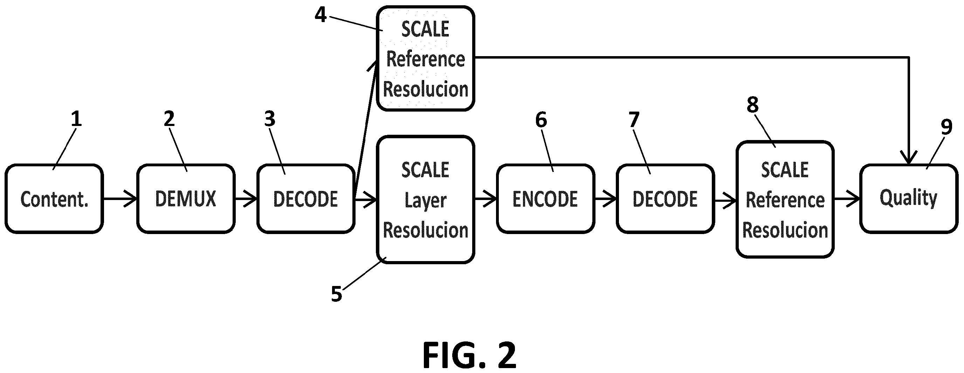

The video quality metrics is measured by an algorithm, as shown in Figure 2, which uses a Reference Resolution previously defined. The video encoding device receives an input video content (1) "content.ts" to be streamed to a video client device. The input video content "content.ts" may be a high quality version of the video content to be optimized in H264 format, which can be in any video encoding format like h264, HEVC, VP8, VP9, ..., to be optimized compared to the fixed configuration provided. The received video content (1) is firstly demultiplexed (2) and then decoded (3) and, for every value of optimization resolution, the video content is scaled by the previously defined Reference Resolution (4) and compared with its downscaling to the fixed resolution of the adaptive streaming layer configuration. The video encoded (6) according to the fixed adaptive streaming layer configuration is again decoded (7). After decoding (7) and upscaling (8) the video to the Reference Resolution, quality is measured (9).

According to the possible embodiment of the invention shown in Figure 2, the video layers can be characterized for the resolution of the video client devices, for deployments that are targeted for a wide range of different devices, so that ABR profiles can be optimized for these devices depending on their Reference Resolution. Figure 2 shows the flowchart that gives as a result the characterization graphs as shown in Figure1. Video clients can dynamically adapt to the different layers limited by the device resolution and the network constraints. For avoiding lacks of compatibility, it is relevant to restricting the maximum resolution of the layers applicable to each device, fixing in the ABR playlists the maximum resolution included, ensuring the correct working of each video stream in the device where is targeted for. The content for each device is characterized for the resolutions that are less or equal to reference resolution for these devices; for example, for a "device 1" which is a smartphone, for a "device 2" which is a tablet, a "device 3" which is a computer screen, as shown in Table 2.

| Video Layer | Device Resolution | Bitrate | Client Device | Reference Resolution |
|---|---|---|---|---|
| Layer1 | 426x240 | 500 Kbps | Device1 | 640x360 |
| Layer2 | 640x360 | 800 Kbps | Device1 | 640x360 |
| Layer3 | 854x480 | 1500 Kbps | Device2 | 1280x720 |
| Layer4 | 1280x720 | 3000 Kbps | Device2 | 1280x720 |
| Layer5 | 1920x1080 | 6000 Kbps | Device3 | 1920x1080 |

Further quality/bitrate improvement is also achieved by incrementing the number of optimization resolutions to consider in the device characterization process. Using a bigger number of resolutions for characterization than the number of video layers to be created increases the optimization possibilities and so increases the bitrate/quality optimization. Thus, all the embodiments of the invention described below can work using a bigger number of resolutions for characterization than the number of video layers to be created.

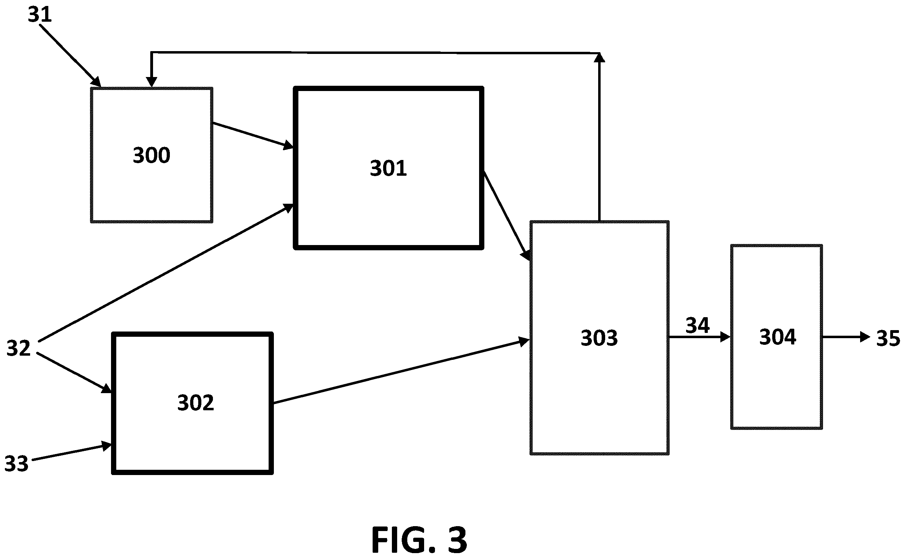

According to a possible example of the video device characterization process, shown in Figure 3, in order to determine the optimization resolutions (300), the bandwidth of Network and an initial layer configuration are provided (31), for example, by a TV operator. The initial layer configuration always refers to an existing adaptive streaming layer configuration; for example, a fixed layer configuration/bitrates of 0.5; 0.8; 1.5; 3 and 6 Mbit/sec. The next step is the downscaling (301), including encoding and decoding, to a reference resolution of an input encoded video content (32); for example, encoded H264 video file, at highest resolution. Any other encoding format can be used; eg.g, HEVC, AV1, VP8, VP9, etc. The input encoded video content (32) is transcoded to the fixed resolution of the initial layer configuration, decoded and then upscaling (302) to the optimum or Reference Resolution (33) for the video device. The results from the downscaling (301) and upscaling (302) steps are used to measure (303) the quality associated with the Reference Resolution (33) and a quality versus bitrate curve is obtained (34). The analysis (304) of this curve outputs combinations of bitrate/resolutions (35) to be applied as an optimized configuration.

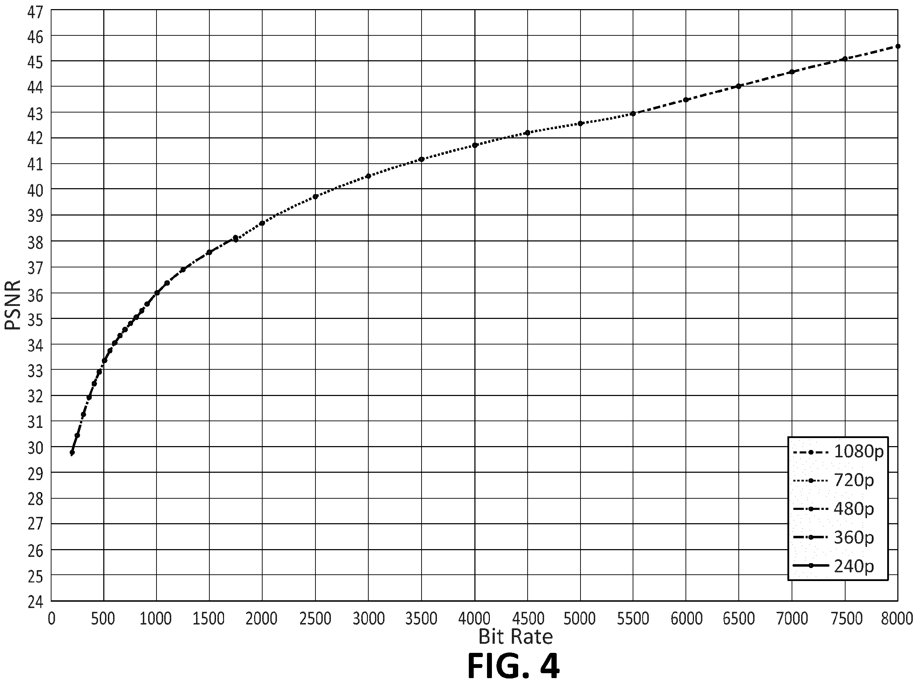

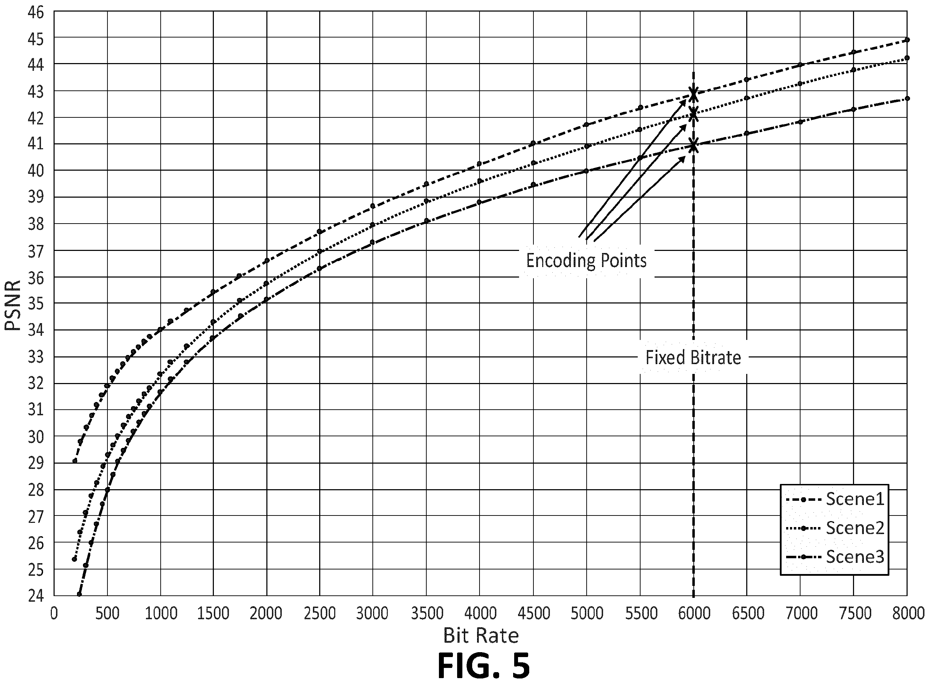

In the previous bitrate/quality graph, shown in Figure 1, optimal bitrate ranges for each resolution match with the plots where each line is on top of the rest. This is best shown by removing the non-optimal plots and so the resulting graph, Figure 4, shows optimal bitrate ranges for the different resolutions. By using this information, Figure 4 shows that optimal encodings of this video portion for bitrates below 350 kbps must be done at resolutions 426x240 pixels, for bitrates between 350 kbps and 800 kbps optimal encodings must be done at a resolution of 640x360 pixels, and so on. On the contrary, fixed layer configurations may not lay in optimal bitrate/resolution ranges for many different contents, being candidate for quality optimization, by applying a dynamic bitrate/resolution scheme based on previous models. Using a possible embodiment of the invention, the optimal encoding is not being used for each portion. It is likely that in each of them, it is possible to find another combination of resolution-bitrate that provides better results in terms of quality improvement or bitrate reduction. Then, using the information provided by the graph of Figure 4 and using a fixed configuration of video layers, several optimization scenarios for video contents can be considered, as shown in Figure 5:

- Scene 1: Content optimization using a lower bitrate and keeping the same quality than initial encoding.
- Scene 2: Improvement of the quality keeping the same bitrate.
- Scene 3: Any intermediate solution that implies a reduction of the bitrate and an increase of the quality.

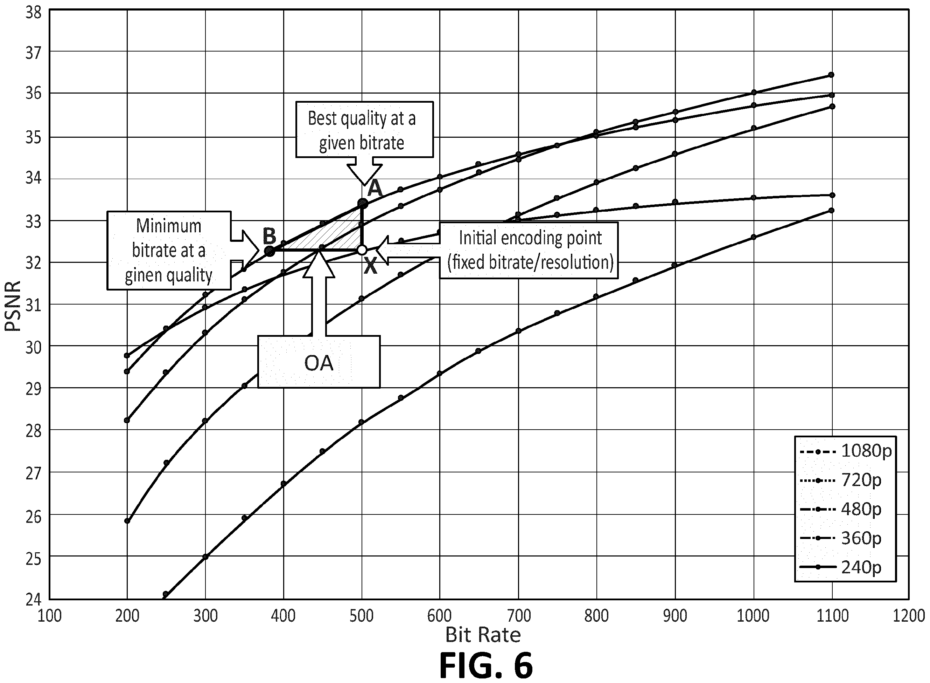

In that way, for each portion encoded to a fixed bitrate and resolution, the optimal combinations that provide a better relation between bitrate and quality can be defined. These combinations are contained in an area of the resolution-bitrate graph, called here the Opportunity Area. Figure 6 shows the structure of the opportunity or optimization area (OA) for a given encoding. Any encoding inside this area implies a better result than the initial configuration. Whitin the opportunity area, the proposed method can choose move towards the maximum Quality, point **A,** keeping the same bitrate or choose the minimum bitrate, point **B,** or choose any of the intermediate points that provide better quality and less bitrate than the initial encoding, point **X**. Then, a characteristic function $F_{Rn}$ for each one of the resolutions can be defined as the function that retrieves, for a given bitrate br, the quality $Q_{Rn}$ that would be obtained for a given resolution Rn of the adaptive streaming layer n:

$$Q_{Rn} = F_{Rn}(br)$$

The characteristic function $F_{Rn}$ is obtained doing linear extrapolation of the codification points, as a succession of straight lines, whose ends are the encoding points. In the same manner, its reverse function $F_{Rn}^{-1}$ can be defined to obtain the required bitrate $BR_{Rn}$ for a given quality q in each possible resolution Rn: $BR_{Rn} = F_{Rn}^{-1}(q)$

For an average quality or initial quality value Q, obtained from encoding a video portion using a fixed bitrate/resolution configuration, it is possible to calculate the required bitrate $BR_{Rn}$ to obtain the same quality as the average Q using the characteristic function from the remaining possible resolutions, i.e., $BR_{Rn} = F_{Rn}^{-1}(Q)$

Therefore, the point of minimum bitrate minBR for the same average quality can be defined as the minimum point for all the possible layers:

$$minBR = min(BR_1, BR_2, ...., BR_n)$$

Alternatively, the maximum quality maxQ improvement can be defined as the maximum of applying the characteristic function of all the possible resolutions to the bitrate of the initial configuration

$$maxQ = max(Q_{R1}, Q_{R2}, ....., Q_{Rn})$$

where $Q_{Rn} = F_{Rn}(br)$

The use of these two points, point **A**: maxQ and point **B**: minBR, allows the identification of the boundaries of the Opportunity Area (OA), as shown in Figure 6, which are the limits of the content optimization both in bitrate reduction as in quality improvement:

$$Opportunity\ Area = ([minBR, Q], [BR, Q], [BR, maxQ])$$

Depending on the commercial scenario, a configuration that optimizes quality, bitrate or any point in the middle can be chosen. In Figure 6, any point inside the triangular area (OA) is an improvement over the initial encoding point.

A possible drawback comes with the fact that in any video portion there are complexity changes that can result when even achieving a global improvement in average quality, and punctual quality losses in certain areas of video portion may appear. For avoiding this drawback, it is defined a variable BalancedBR that permits a balance between bitrate and quality in the bitrate axis of Opportunity Area (OA). BalancedBR must be restricted by the bitrate range in the Opportunity Area (OA). This variable BalancedBR can be different depending on the existence of significative changes in complexity or quality in the video portion to be analyzed, and is defined as follows:

$$BalancedBR = WBR_{fixed} * minBR + ThBR_{fixed}$$

where:

$WBR_{fixed} \geq 1$ represents a relative factor for bitrate/quality balancing.
$ThBR_{fixed} \geq 0$ represents a factor for bitrate/quality balancing.
minBR as calculated before

Finally it is defined a balancing function $BalancedQ_n$ to fix a point that balances the optimization of quality and bitrate by weigthing the resolutions inside the Opportunity Area (OA). This function must apply a penalty to big resolutions changes, either for a higher weighting in each characteristic function $F_n$ or setting a threshold that prevents to move to a higher resolution. Different factors can be applied to weight the resolutions depending on the existence of significative complexity or quality changes inside the video portion. The balancing function $BalancedQ_n$ is defined as:

$$BalancedQ_n = WQ_n * QB_n - ThQ_n$$

where:

$0 \leq WQ_n \leq 1$ represents the relative quality penalty due to the number of resolution steps existing from the current resolution to the original fixed resolution of the content layer configuration.

$ThQ_n \geq 0$ represents an absolute threshold that penalty due to the number of resolution steps existing from the current resolution to the original fixed resolution of the content layer configuration.

$QB_n = F_n(BalancedBR_n)$ is the expected quality for each resolution of the content layer n.

$BalancedQ_n$ and $BalancedBR_n$ must be restricted by the quality range in the Opportunity Area (OA).

This process can be repeated across all the content, obtaining an encoding profile where the resolution is not constant on time, and the relation quality/bitrate is optimal. This optimization is applicable for all video services, but is specially interesting for Adaptive Video Profiles, where it is expected that video modifies its encoding parameter on time.

In a possible embodiment of the invention, whenever optimizing the bitrate of a video stream that has been encoded in a fixed resolution-bitrate configuration, the best optimization in terms of bitrate is calculated by obtaining the optimal bitrate and resolution among the optimal ranges of a multilayer bitrate/quality graph and matching the video quality obtained in the fixed resolution-bitrate configuration. This point **B**, minimum bitrate minBR matching the given video quality, can be graphically found, as shown in Figure 7, by finding the crossing point between the graph lines of Figure 1 which represent the bitrate optimal ranges and a horizontal line crossing the point X which represents the fixed resolution-bitrate encoding.

In another possible embodiment of the invention, whenever optimizing the quality of a video stream that has been encoded in a fixed resolution-bitrate configuration, the best optimization in terms of quality can be calculated by obtaining the optimal resolution among the optimal ranges of a multilayer bitrate/quality graph, and matching the fixed bit rate applied in the fixed resolution-bitrate configuration. This point **A**, maximum quality maxQ at the given bitrate, can be graphically found, as shown in Figure 8, by finding the crossing point between the graph lines of Figure 1 which represent the bitrate optimal ranges and a vertical line crossing the point **X** which represents the fixed resolution-bitrate encoding.

All the embodiments mentioned here result in more than 25% bitrate optimization in average while maintaining or increasing the video quality. This video optimization can be very relevant for the business of mobile operators.

## Claims

1. A method for video content encoding optimisation in adaptive streaming systems, comprising:

   - receiving video content portions of a video content (1, 32) to be streamed to a client device, via adaptive streaming using a network bandwidth, the video content (1, 32) being encoded to a fixed combination of bitrate and resolution, the fixed combination of bitrate and resolution being defined by an adaptive streaming layer, provided by the client device;

   The method being **characterised by** further comprising:

   - obtaining a plurality of optimisation resolutions for the client device based on a reference resolution, the reference resolution being associated with a type of client device, and the fixed combination of bitrate and resolution;
   - obtaining a range of transmission bitrates based on the network bandwidth and the fixed combination of bitrate and resolution;
   - obtaining for each of the optimisation resolutions, a plurality of combinations of bitrate and resolution at every bitrate of the range of transmission bitrates;
   - calculating a quality value associated with each combination of bitrate and resolution obtained at the previous step and an initial quality value associated with the fixed combination of bitrate and resolution;
   - encoding each video content portion to a selected combination of bitrate and resolution, the combination of bitrate and resolution used for encoding being selected based on the calculated quality values and initial quality value.

2. The method according to claim 1, wherein the selected combination of bitrate and resolution used for encoding has a bitrate lower than the fixed combination of bitrate and resolution and has the same quality value as the initial quality value.

3. The method according to claim 1, wherein the selected combination of bitrate and resolution used for encoding has a quality value higher than the initial quality value and has the same bitrate as the fixed combination of bitrate and resolution.

4. The method according to claim 1, wherein the selected combination of bitrate and resolution used for encoding has a bitrate lower than the fixed combination of bitrate and resolution and a quality value higher than the initial quality value.

5. The method according to any preceeding claim, wherein the quality value, $Q_{Rn}$, associated with a pair of bitrate, br, and resolution, Ri, where i=1, 2,..., n and n is the number of adaptive streaming layers provided by the client device, is calculated as $Q_{Ri} = F_{Ri}(br)$, where $F_{Ri}$ is a characteristic function obtained doing linear extrapolation of points of encoding the video content portion represented in a bitrate versus quality graph.

6. The method according to claim 5, wherein obtaining the plurality of optimisation resolutions comprises:

- calculating a required bitrate $BR_{Ri}$ to obtain the same quality as the initial quality value Q as $BR_{Ri} = F_{Ri}^{-1}(Q)$,;
- calculating a minimum bitrate minBR for the same initial quality value Q as $minBR = min(BR_1, BR_2, ...., BR_n)$;
- calculating a maximum quality maxQ as
$maxQ = max(Q_{R1}, Q_{R2}, ....., Q_{Rn})$ where $QRi = F_{Ri}(br)$
- defining an Opportunity Area (OA) in the bitrate versus quality graph whose boundary points are the ones with coordinates [minBR, Q], [BR, Q], [BR, maxQ], and obtaining the optimisation resolutions as the resolutions which cross the Opportunity Area (OA).

7. The method according to claim 6, wherein obtaining the plurality of combinations of bitrate and resolution comprises weighting the optimisation resolutions inside the Opportunity Area (OA).

8. The method according to claim 6, wherein obtaining the plurality of combinations of bitrate and resolution comprises weighting the bitrate range within the Opportunity Area (OA).

9. A video encoding device of an adaptive streaming system, comprising:

- an input device for receiving video content portions of a video content (1, 32) to be streamed to a client device, via adaptive streaming using a network bandwidth, the video content (1, 32) being encoded to a fixed combination of bitrate and resolution, the fixed combination of bitrate and resolution being defined by an adaptive streaming layer, the client device providing said adaptive streaming layer;

the video encoding device being **characterised by** further comprising a processor configured for:

- obtaining a plurality of optimisation resolutions for the client device based on a reference resolution, the reference resolution being associated with a type of client device, and the fixed combination of bitrate and resolution;
- obtaining a range of transmission bitrates based on the network bandwidth and the fixed combination of bitrate and resolution;
- obtaining for each of the optimisation resolutions, a plurality of combinations of bitrate and resolution at every bitrate of the range of transmission bitrates;
- calculating a quality value associated with each combination of bitrate and resolution obtained at the previous step and an initial quality value associated with the fixed combination of bitrate and resolution;
- selecting a combination of bitrate and resolution based on the calculated quality values and initial quality value, the selected combination of bitrate and resolution being used to encode each video content portion by the video encoding device.

10. A computer program product comprising computer-executable instructions for performing the method according to any of the claims 1-8, when the program is run on a computer.

11. A digital data storage medium encoding a machine-executable program of instructions to perform a method according to any of the claims 1-8.

FIG. 1

**FIG. 2**

EP 3 451 672 A1

**FIG. 3**

**FIG. 4**

EP 3 451 672 A1

FIG. 5

EP 3 451 672 A1

FIG. 6

FIG. 7

FIG. 8

Europäisches
Patentamt

European
Patent Office

Office européen
des brevets

# EUROPEAN SEARCH REPORT

Application Number

EP 17 38 2585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/088054 A1 (HASSAN YOMNA [EG] ET AL) 24 March 2016 (2016-03-24)<br>* abstract *<br>* paragraphs [0015] - [0053] *<br>* figures 1-10 * | 1-11 | INV.<br>H04N21/234<br>H04N21/2343<br>H04N21/2662 |
| Y | Anne Aaron ET AL: "Per-Title Encode Optimization - Netflix TechBlog - Medium",<br>,<br>14 December 2015 (2015-12-14),<br>XP055430204,<br>Retrieved from the Internet:<br>URL:https://medium.com/netflix-techblog/per-title-encode-optimization-7e99442b62a2<br>[retrieved on 2017-11-29]<br>* the whole document * | 1-11 | |
| A | WO 2011/119111 A1 (AGENCY SCIENCE TECH & RES [SG]; YU RONGSHAN [SG]; LI TE [SG]; SHU HAIY) 29 September 2011 (2011-09-29)<br>* abstract *<br>* page 3, lines 15-31 *<br>* figures 1-11 * | 1-11 | |
| A | EP 2 429 190 A1 (NTT DOCOMO INC [JP]) 14 March 2012 (2012-03-14)<br>* abstract *<br>* paragraphs [0011] - [0034] *<br>* figures 1-6 * | 1-11 | TECHNICAL FIELDS SEARCHED (IPC)<br><br>H04N<br>H04L |
| A | WO 2016/183251 A1 (MEDIAMELON INC [US]) 17 November 2016 (2016-11-17)<br>* abstract *<br>* paragraphs [0007] - [0112], [0131], [0134], [0162], [0165] *<br>* figures 1-18 * | 1-11 | |

-/--

The present search report has been drawn up for all claims

| Place of search | Date of completion of the search | Examiner |
|---|---|---|
| Munich | 4 December 2017 | Horstmannshoff, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 17 38 2585

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/223509 A1 (TWEEDALE PAUL [US] ET AL) 29 August 2013 (2013-08-29)<br>* abstract *<br>* paragraphs [0003] - [0008] *<br>* figures 1-5 *<br>----- | 1-11 | |
| A | US 2009/016434 A1 (AMONOU ISABELLE [FR] ET AL) 15 January 2009 (2009-01-15)<br>* paragraphs [0053] - [0085] *<br>* figures 1-19 *<br>----- | 1-11 | |
| A | US 2017/085616 A1 (BOTSFORD NELSON [US] ET AL) 23 March 2017 (2017-03-23)<br>* abstract *<br>* paragraphs [0003] - [0006], [0042] *<br>* figures 1-5 *<br>----- | 1-11 | |

TECHNICAL FIELDS SEARCHED (IPC)

The present search report has been drawn up for all claims

| Place of search | Date of completion of the search | Examiner |
|---|---|---|
| Munich | 4 December 2017 | Horstmannshoff, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2585

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2017

| Patent document cited in search report | | Publication date | Patent family member(s) | | Publication date |
|---|---|---|---|---|---|
| US 2016088054 | A1 | 24-03-2016 | CA | 2957215 A1 | 31-03-2016 |
| | | | CN | 106576182 A | 19-04-2017 |
| | | | EP | 3198877 A1 | 02-08-2017 |
| | | | JP | 2017533607 A | 09-11-2017 |
| | | | KR | 20170032431 A | 22-03-2017 |
| | | | TW | 201622393 A | 16-06-2016 |
| | | | US | 2016088054 A1 | 24-03-2016 |
| | | | WO | 2016048558 A1 | 31-03-2016 |
| WO 2011119111 | A1 | 29-09-2011 | EP | 2553928 A1 | 06-02-2013 |
| | | | SG | 184230 A1 | 29-11-2012 |
| | | | US | 2013073297 A1 | 21-03-2013 |
| | | | WO | 2011119111 A1 | 29-09-2011 |
| EP 2429190 | A1 | 14-03-2012 | AU | 2011221423 A1 | 29-03-2012 |
| | | | BR | PI1105259 A2 | 17-06-2014 |
| | | | CA | 2752004 A1 | 13-03-2012 |
| | | | CN | 102404565 A | 04-04-2012 |
| | | | EP | 2429190 A1 | 14-03-2012 |
| | | | JP | 5559113 B2 | 23-07-2014 |
| | | | JP | 2012070373 A | 05-04-2012 |
| | | | KR | 20120028823 A | 23-03-2012 |
| | | | RU | 2011137481 A | 27-03-2013 |
| | | | TW | 201212636 A | 16-03-2012 |
| | | | US | 2012062791 A1 | 15-03-2012 |
| WO 2016183251 | A1 | 17-11-2016 | US | 2016337680 A1 | 17-11-2016 |
| | | | WO | 2016183251 A1 | 17-11-2016 |
| US 2013223509 | A1 | 29-08-2013 | NONE | | |
| US 2009016434 | A1 | 15-01-2009 | AT | 458355 T | 15-03-2010 |
| | | | BR | PI0519842 A2 | 17-03-2009 |
| | | | CN | 101120591 A | 06-02-2008 |
| | | | CN | 102065295 A | 18-05-2011 |
| | | | EP | 1839442 A1 | 03-10-2007 |
| | | | ES | 2341178 T3 | 16-06-2010 |
| | | | FR | 2880743 A1 | 14-07-2006 |
| | | | JP | 5042856 B2 | 03-10-2012 |
| | | | JP | 2008527870 A | 24-07-2008 |
| | | | KR | 20070102547 A | 18-10-2007 |
| | | | US | 2009016434 A1 | 15-01-2009 |
| | | | WO | 2006074855 A1 | 20-07-2006 |
| US 2017085616 | A1 | 23-03-2017 | US | 2017085616 A1 | 23-03-2017 |
| | | | WO | 2017053234 A1 | 30-03-2017 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 38 2585

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2017

| Patent document cited in search report | Publication date | Patent family member(s) | Publication date |
|---|---|---|---|
| -------------------------------------------------------------------------------- | | | |

For more details about this annex : see Official Journal of the European Patent Office, No. 12/82

EPO FORM P0459